# EUROPEAN PATENT SPECIFICATION

(11) **EP 2 858 791 B1**
(45) Date of publication and mention of the grant of the patent: **20.09.2017**
(21) Application number: 13792438.7
(22) Date of filing: 11.06.2013
(51) Int. Cl.: B25J 9/00

(54) **AN EXOSKELETON STRUCTURE FOR PHYSICAL INTERACTION WITH A HUMAN BEING**
EIN EXOSKELETT STRUKTUR FÜR DIE KÖRPERLICH INTERAKTION MIT EINEM MANN
STRUCTURE D'EXOSQUELETTE PERMETTANT UNE INTERACTION PHYSIQUE AVEC UN ÊTRE HUMAIN

(30) Priority: 11.06.2012 IT PI20120069
(43) Date of publication of application: 15.04.2015
(73) Proprietor: Scuola Superiore di Studi Universitari e di Perfezionamento Sant'Anna, 56127 Pisa (IT)
(72) Inventor: BERGAMASCO, Massimo, 56010 Castelmaggiore - Calci (IT); SALSEDO, Fabio, 56125 Pisa (IT); LENZO, Basilio, 57025 Piombino (LI) (IT)
(74) Representative: Celestino, Marco
(86) International application number: PCT/IB2013/054783
(87) International publication number: WO 2013/186705

(56) References cited:
- WO-A1-2008/131563
- WO-A2-2008/031023
- WO-A2-2012/042416
- BERGAMASCO M ET AL: "An arm exoskeleton system for teleoperation and virtual environments applications", ROBOTICS AND AUTOMATION, 1994. PROCEEDINGS., 1994 IEEE INTERNATIONAL C ONFERENCE ON SAN DIEGO, CA, USA 8-13 MAY 1994, LOS ALAMITOS, CA, USA,IEEE COMPUT. SOC, 8 May 1994 (1994-05-08), pages 1449-1454, XP010097703, DOI: 10.1109/ROBOT.1994.351286 ISBN: 978-0-8186-5330-8

## Description

### Field of the invention

The present invention relates to robot devices for human interaction (Physical Human-Device Interaction) and, in particular it relates to an exoskeleton to be worn on the upper or on the lower limb of a user.

### Description of the prior art

Exoskeleton robot devices are known for force interaction with a human being. These devices are characterized by a kinematics isomorphous to human limb on which they are worn, i.e. by a kinematics that has the same number and succession of degrees of freedom as the limb, and that has mechanical axes substantially coincident with the axes of the physiological joints.

Examples of applications of such devices can be found in the fields of: rehabilitation of patients after neurological trauma (Rehabilitation Robotics), daily assistance to elderly and disabled persons (Assistive Robotics), the reduction of articular stresses deriving from handling material in logistic and production processes (Material Handling Robotics).

An example of exoskeleton for the upper limbs is disclosed in WO2004058458, in which 3 degrees of freedom for the movement of the exoskeleton shoulder joint are obtained by three serially arranged hinge joints, whose rotation axes are two-by-two orthogonal and are incident at a point substantially coincident with the centre of the corresponding human joint. In particular, the first two hinge joints allow reproducing the shoulder abduction-adduction and flexion-extension movements, whereas the third rotational joint, whose axis is substantially aligned with a line joining the centre of the shoulder joint and the centre of the elbow joint, allows reproducing the shoulder internal and external rotations.

The first two hinge joints are conventionally implemented by two bearings whose axes are aligned with the axis of the rotational joint, while the third rotational joint is implemented by a circular guide, whose open structure allows it to be worn laterally, which is not possible in a conventional implementation which, as a matter of fact, requires placing one's arm within a ring structure.

In order to reduce the weight and the size of the movable portions of the device, the first four degrees of freedom are actuated by electric motors arranged at a device base portion, which is integrally mounted to the user's back with a suitable fastening means, and by tendons and idle and condotte pulleys, which transmits the torque from the motors to the joints of the device.

As well known, causing a spherical motion of a movable body with respect to a base body by three serially arranged hinge joints is an easy implementation, but is characterized by the kinematical singularities which reduces the number of degrees of freedom of the mechanism from three to two. These singularities occur in the positions where the axis of the third rotational joint is aligned with the axis of the first rotational joint.

In case of the exoskeleton described in WO2004058458, since the axis of the third rotational joint is substantially aligned with a line between the centre of the shoulder joint and the centre of the elbow joint and, accordingly, with the higher encumbrance direction of the humerus (long axis of the humerus), the above mentioned singularities occur when the long axis of the humerus is substantially aligned with the axis of the first rotational joint of the shoulder joint of the exoskeleton.

In order to avoid the singularities of the shoulder joint of the exoskeleton, when using the device the axis of the first rotational joint must therefore be positioned outside of the space of movement of the humerus with respect to the trunk, or workspace. However, the extent of the abduction-adduction and flexion-extension movements allowed by the shoulder joint of a subject with normal motion capability, so wide that the workspace of the humerus with respect to the trunk is wider than a half-space and, therefore, the above mentioned condition cannot be fulfilled.

As a consequence, in case of the exoskeleton described in WO2004058458, in order to avoid kinematical singularity the mobility of the shoulder joint allowed by the device must be limited with respect to the corresponding human joint.

Even if can be accepted in some applications, for example in the rehabilitation robotics, such a limitation cannot be accepted for other uses of the device, such as handling materials in the building industry, since it reduces significantly the user's operating capacity.

A further limitation of the solution described in WO2004058458 is that suitable crossings of the actuation tendons must be provided, with respect to the elbow joint, in the structure of the circular guide. These crossing have been provided by a plurality of idle pulleys whose axes stand along a circumference that has its centre on the axis of the circular guide. This solution causes a higher friction level in the elbow transmission, due to the relatively large number of joint elements, as well as a higher device manufacture cost and larger size and weight of its mobile portions.

Another drawback of the solution implementation described in WO2004058458 is due to the encumbrance of the circular guide, since the latter is arranged about the upper portion of the arm, and therefore remarkably limits its adduction movement, due to some interferences of the circular guide with the operator's trunk.

Another example of upper limb exoskeleton is disclosed in US20110098619, in which, like for device described in WO2004058458, the shoulder joint comprises three serially arranged hinge joints. However, unlike the above device, the axis of the third rotational joint is parallel to the axis of the elbow joint and the axis of the first rotational joint is substantially orthogonal to the front plane of the trunk, therefore the kinematic singularity of the shoulder joint occurs outside of the humerus natural workspace.

Even if the kinematics of the device described in US20110098619 makes it possible to effectively overcome the problem of the kinematic singularity of the shoulder joint, the second rotational joint is implemented by circular guide, which makes it difficult to remotely actuate the joints downstream of the circular guide and, in particular, the flexion-extension of the shoulder and the flexion-extension of the elbow. As a matter of fact, a mechanical transmission must be provided through the circular guide in order to allow this operation is, at the same time ensuring a correct operation. In case transmission tendons are used, this passage can be made by an independent array of idle pulleys whose axes stand on a circumference that has its own centre on the axis of the circular guide, for each transmission which passes through the latter. However, it is evident how much such an implementation is complex and expensive to manufacture. Moreover, the increased encumbrance and weight, due to the arrays of additional pulleys, would be make a remote actuation of the joints downstream of the circular guide no longer advantageous, with respect to a local actuation, which is used, as a matter of fact, in the device described in US20110098619.

A further drawback of the use of a circular guide for implementing the second rotational joint of the shoulder joint, is that only a narrow angular travel can be obtained for this joint, since the angular encumbrance of the circular guide must be limited in order to avoid any interference of its structure with the user's body. For instance, if the angular encumbrance of the guide is prolonged frontally with respect to the joint articulation, in order to widen the allowed travel of the circular guide, a relatively wide bending movement of the shoulder joint would lead the arm to interference with the guide structure.

An exoskeleton for the upper limbs is also disclosed in WO2008031023A2. It provides a forearm brace and an upper arm brace connected by an elbow joint mechanism, The upper arm brace is connected to a trunk brace by a shoulder joint which comprises three parallel serial kinematic chains. Each chain is formed by curved links in series. The first link of each chain is powered by a CVT that is arranged on the trunk brace. Such exoskeleton has the disadvantage of a very limited workspace which is much lower than the natural workspace of the arm.

### Summary of the invention

It is a feature of the present invention to provide an exoskeleton robotic device that implements the shoulder or hip mechanism and that is easily wearable on a user's upper or lower limb.

It is a feature of the present invention to provide such a robotic device, which makes it possible to reproduce the abduction-input, internal and external rotation and flexion-extension movements of the shoulder or of the hip, with no or minimum limitation with respect to the normal motion space, i.e. workspace, of these joints for subjects with a reduced motion capacity,

It is also a feature of the present invention to provide such a robotic device that allows easily manufacturing mechanical transmissions for remotely actuating all the degrees of freedom of the shoulder or of the hip, as well as of the joints downstream of the shoulder joint.

It is a further feature of the invention to provide such a robotic device that has no encumbering parts before the centre of the above mentioned joints, for limb movement any.

These and other objects are achieved by an exoskeleton robotic device, to be worn on a user's upper or lower limb, said device having a shoulder or hip exoskeleton joint comprising:
- a base body, configured to be fixed substantially integral to the user's trunk and arranged to be located in the back portion of the user's upper body;
- a first movable body, connected to said base body by a first rotational joint, that has a first rotation axis substantially orthogonal to the front plane of the user's upper body and passing substantially through the centre of said user's the shoulder or hip joint;
- a second movable body, connected to said first movable body by a second rotational joint that has a second rotation axis substantially orthogonal to said first axis and configured to be incident with said first axis at an intersection point substantially coincident with the centre of the user's shoulder or hip joint;
- a third movable body, substantially integral to the user's arm or leg and connected to said second movable body by a third rotational joint that has a third rotation axis configured to be substantially parallel to the flexion-extension axis of the user's elbow or knee, substantially orthogonal to said second axis and incident with the second axis at said intersection point substantially coincident with the centre of the user's shoulder or hip joint,
characterized in that
- said second rotational joint is implemented in said second movable body by a remote centre of rotation mechanism which has its own centre at said point;
- said remote centre of rotation mechanism comprises a four-bar linkage mechanism.
With respect to the prior art, such as WO2008031023A2, the exoskeleton robotic device has the advantage of a workspace which is as wide as the arm natural workspace.

In particular, said four-bar linkage mechanism comprises two parallelograms that have sides which are two-by-two adjacent and pivotally connected to each other by respective hinges.

In particular, an abduction/adduction movement of the shoulder or of the hip is obtained by the first rotational joint, about a first axis substantially orthogonal to a front plane that passes through said user's shoulder joint and hip joint, respectively, a rotation movement of the shoulder or of the hip is obtained by the second rotational joint about a second axis substantially orthogonal to said first axis and substantially parallel to said front plane, while a flexion/extension movement of the shoulder or of the hip is obtained by the third rotational joint about a third axis substantially orthogonal to said first and to said second axis, and substantially parallel to said front plane, wherein the rotation movement of the shoulder or of the hip is obtained by said four-bar linkage mechanism that is located between the abduction/adduction rotational joint and the flexion/extension rotational joint and provides a remote centre of rotation that is coaxial with said second axis.

This way, a spherical kinematics of the shoulder joint can be provided that does not have kinematical singularities in the humerus or femur workspace with respect to the trunk, using the above-mentioned remote centre of rotation mechanism for implementing the second rotational joint, said mechanism preferably formed by said two parallelograms connected to each other.

Moreover, this type of remote centre of rotation mechanism allows a relatively wide angular travel, even if the space available for receiving the parts of the mechanism is particularly narrow. In fact, a suitable selection of the kinematic parameters of the remote centre of rotation mechanism, and a suitable design of its movable parts, can allow an angular travel of the second rotational joint wider than 110°, which is more than enough to reproduce internal-external rotation movement of a healthy user's arm.

A further advantage of this remote centre of rotation mechanism is the absence of encumbering parts in the space in of the shoulder joint, for all the positions of the humerus workspace with respect to the trunk and, accordingly, the absence of restrictions to the shoulder bending movement.

In particular, said exoskeleton comprises joints that are arranged downstream of said second rotational joint and are comprise three main idle pulleys whose axes are aligned with suitable axes of the hinges of the two parallelograms, which form said remote centre of rotation mechanism.

This way, the remote centre of rotation mechanism allows more easily providing the mechanical transmission means that is required for remotely actuating the joints downstream of the second rotational joint of the shoulder joint and, in particular, for remotely actuating its third rotational joint and the elbow joint.

Further, secondary idle pulleys can be provided whose axes are integral to said movable parts of the mechanism, in order to keep the tendon wound about the main idle pulleys in all the positions attained by the cable.

Advantageously, the exoskeleton robotic device, which is the object of the invention, may also comprise a fourth movable body that is substantially integral to the user's forearm and is connected to said third movable body by a fourth rotational joint, whose axis is substantially parallel to the axis of said third rotational joint and is substantially incident to the centre of the elbow joint.

In particular, each four-bar linkage comprises a first, a second, a third and a fourth elongated bodies that are pivotally connected to one another and are articulated with said first movable body and with said third movable body by said hinges, each hinge comprising a respective rotation axis parallel to said second rotation axis of the second movable body.

In particular, said first, second, third and fourth elongated body are pivotally connected to each other in such a way that:

Advantageously, the first, the second, the third and the fourth elongated bodies are pivotally connected to each other in such a way that:
- the first elongated body can rotate with respect to the first movable body by means of a first hinge,
- the second elongated body can rotate with respect to the first elongated body by means of a second hinge, and can rotate with respect to the third movable body by means of a third hinge.
- the third elongated body can rotate with respect to the third movable body by means of a fourth hinge and can rotate with respect to the first elongated body by means of a fifth hinge.
- the fourth elongated body can rotate with respect to the first movable body by a sixth hinge and can rotate with respect to the second elongated body by means of a seventh hinge.

In a preferred exemplary embodiment,
- the distance between the first hinge and the second hinge is the same as the distance between the third hinge and the axis of said remote centre of rotation;
- the distance between the sixth hinge and the seventh hinge is the same as the distance between the third hinge and the axis of said remote centre of rotation;
- the distance between the second hinge and the third hinge is the same as the distance between the first hinge and the axis of said remote centre of rotation;
- the distance between the fifth hinge the fourth hinge is the same as the distance between the first hinge and the axis of said remote centre of rotation.

Advantageously, the device may comprise further rigid bodies and respective further hinge joints, so that it can more closely reproduce the movement of the various joints of the limb on which it is worn.

According to a further aspect of the invention, the base body is configured to be substantially integrally fastened to a user's trunk and to be arranged in the back portion of said trunk, in a rucksack support.

### Brief description of the drawings

The invention will now be shown with the following description of an exemplary embodiment thereof, exemplifying but not limitative, with reference to the attached drawings in which:
- Fig. 1 shows an exoskeleton worn on an operator's arm and provided with a rucksack support configured for bearing an active or passive actuation mechanism, a shoulder joint being highlighted that is obtained by intersection of an abduction/adduction axis, of a rotation axis and of a flexion/extension axis;
- Fig. 3 shows a serial chain of movable elements and of joints with four degrees of freedom and two fixed segments, which can reproduce the movement of an upper limb or of a lower limb, and which is implemented by the exoskeleton of Fig. 1;

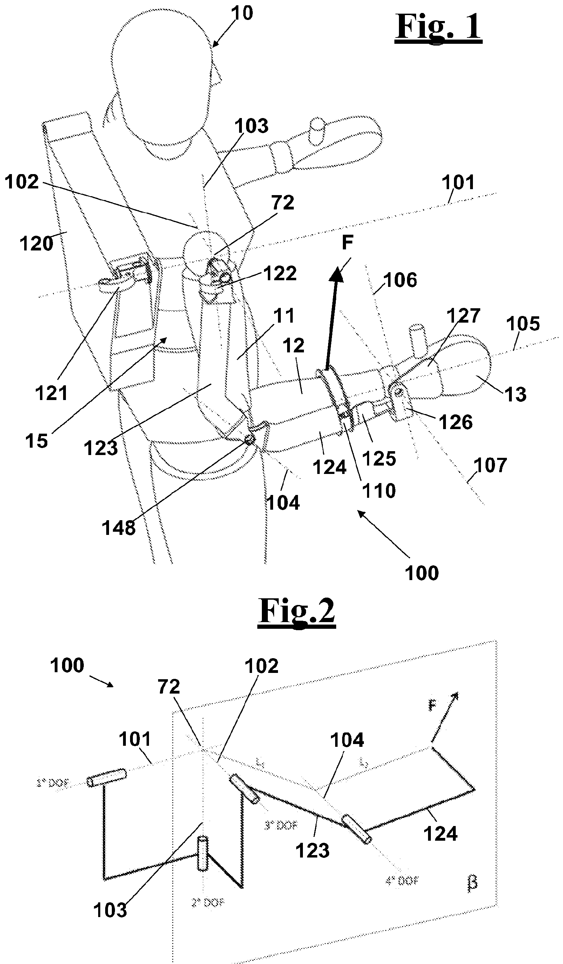

- Fig. 2 partially shows the full exoskeleton of Fig. 1 and also shows a detail of an embodiment of the movable elements forming the shoulder joint;

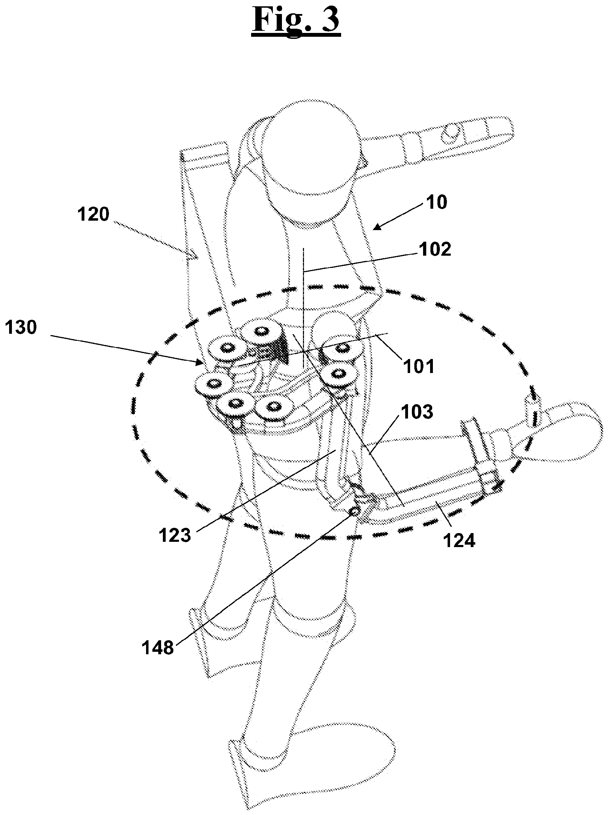

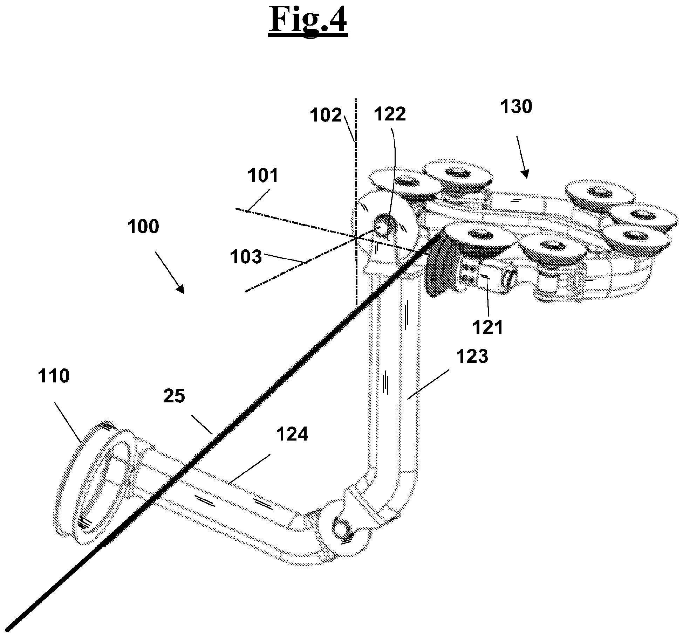

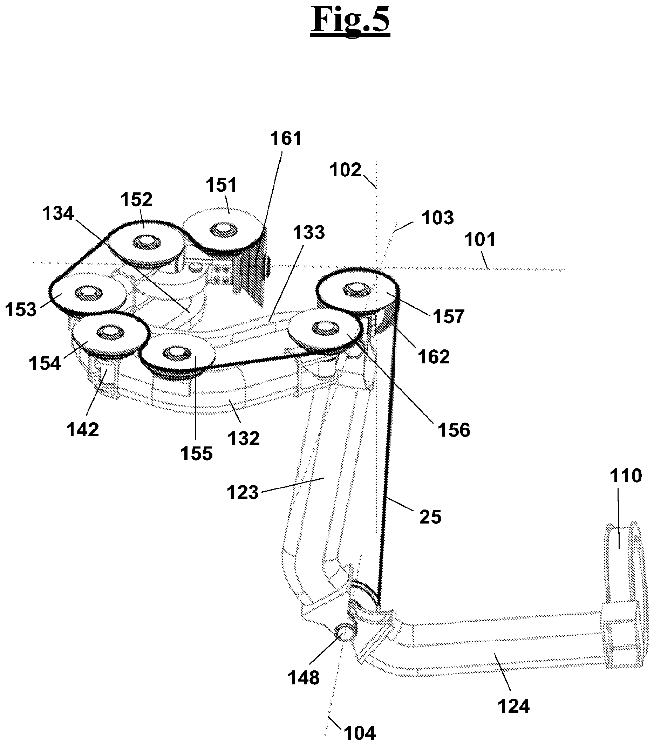

- Fig. 4 and Fig. 5 show the exoskeleton of Fig. 3 more in detail and in two different prospective points, as well as the actuation tendons;

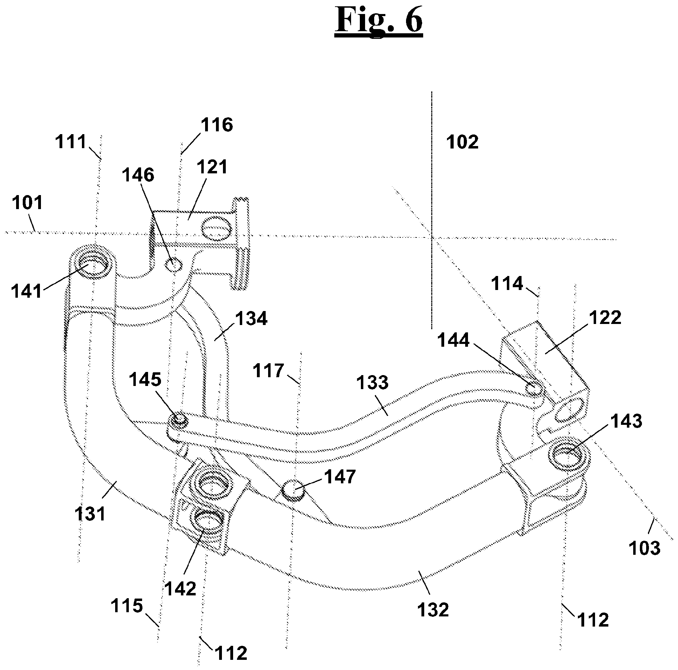

- Fig. 6 shows a remote centre of rotation mechanism comprising elongated rigid bodies arranged in a double four-bar linkage, used to make a shoulder or hip joint of an exoskeleton like the one that is shown in Figs. 4 or 5;

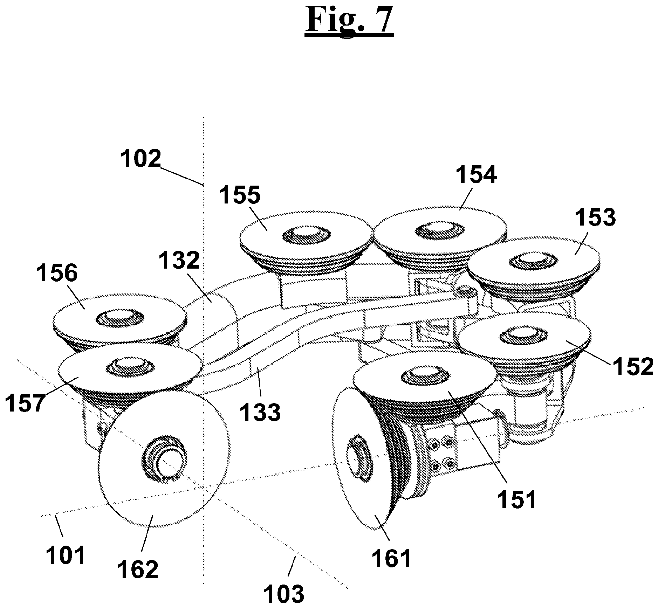

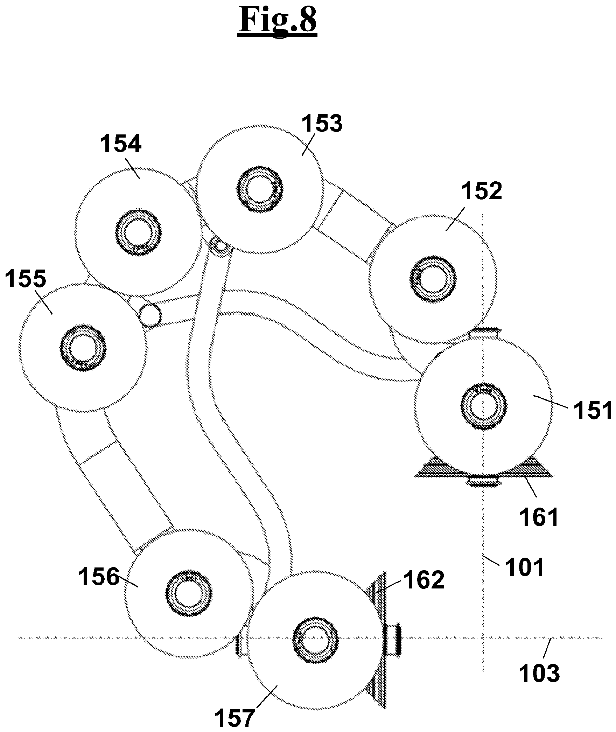

- Fig. 7 and Fig. 8 respectively show a perspective view and top plan view of the mechanism of Fig. 6 in which additional main and secondary idle pulleys;

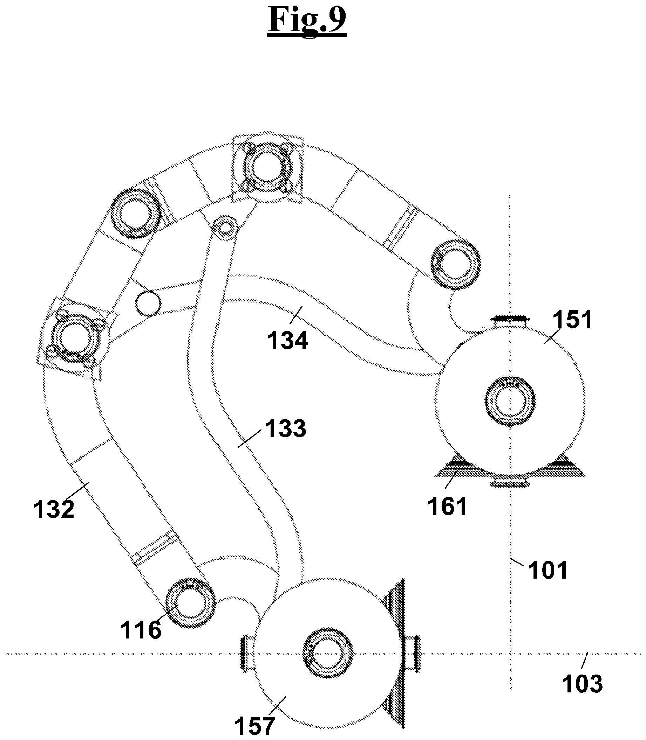

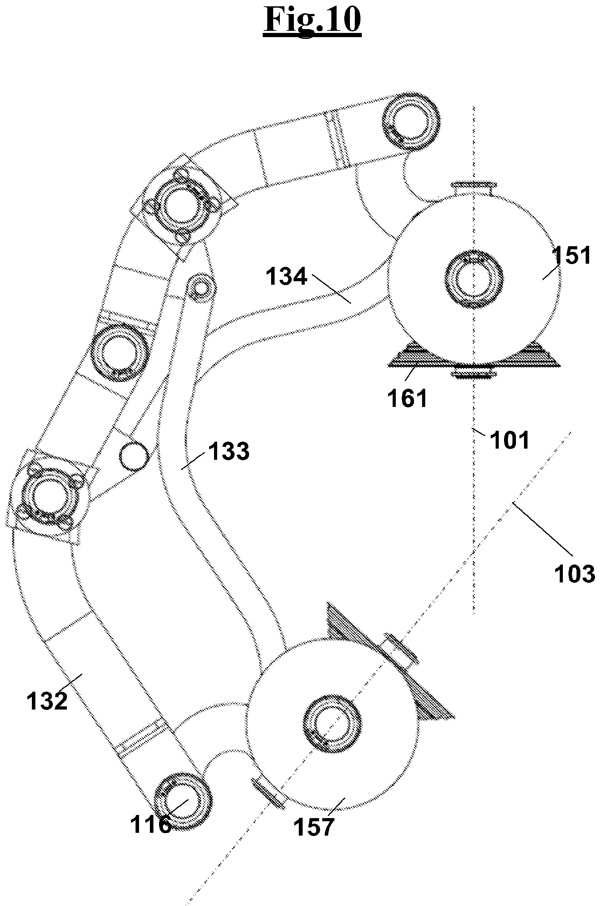

- Figs. 9 and 10 show two possible positions of the mechanism of Fig. 6, in a top plan view similar to Fig. 8.

### Description of exemplary embodiments

With reference to Figs. 1 and 2, an anthropomorphic exoskeleton 100 is shown for an upper limb of a user 10. The user's arm, forearm and hand are indicated as 11,12 and 13, respectively. An end effector is indicated for transmitting a force F to forearm 12 is indicated as 110.

More in detail, in order to be used as an exoskeleton for user's 10 arm 11 and forearm 12, multi-joint arm 100, must provide the four degrees of freedom of the limb to end effector 110, i.e. it must provide the abduction-adduction movement of the shoulder, the rotation movement of the shoulder, the bending movement of the shoulder, and the bending movement of the elbow. The first three degrees of freedom can be obtained by means of three hinge joints whose rotation axes are axes 101,102,103, respectively, which are orthogonal to one another and meet at a common point 72, i.e. at the centre of the shoulder.

As shown in Fig. 2, a plane β contains point 72 and end-effector 110, as well as axes 101 and 103. Still with reference to Fig. 1, a passive or active force generator may be formed by an exoskeleton actuation unit 120, which can be worn on the user's trunk 15 like a rucksack, for example.

A first movable body 121 extends from force generator 120, and is arranged for allowing a rotation with respect to unit 120 about a first axis 101 that passes substantially through the centre 27 of the shoulder joint.

In particular, first axis 101 is substantially orthogonal to the front plane of trunk 15 and passes substantially through the centre of the shoulder joint.

Exoskeleton 100 comprises a second movable body 122 to allow a rotation with respect to first movable body 121 along a second axis 102 that passes substantially through centre 72 of the shoulder joint, and is substantially orthogonal to first axis 101 of the first movable body, said rotation along a second axis 102 implemented by a remote centre of rotation mechanism.

Furthermore, as shown in Fig. 1, the exoskeleton comprises a third movable body 123, which can move with respect to second movable body 122 about a third axis 103 that passes substantially through centre 72 of the shoulder joint and is substantially orthogonal to rotation axis 102 of second movable body 122.

In a possible embodiment, exoskeleton 100 can comprise a fourth movable body 124 that can rotate with respect to third movable body 123 by means of a hinge 148 about a fourth axis 104 that passes substantially through the centre of the elbow joint. Fourth axis 104 is substantially parallel to rotation axis 103.

In a further possible embodiment, a fifth movable body 125 is provided that can rotate with respect to fourth movable body 124 about a fifth axis 105 that passes substantially through the centre of the elbow joint and is substantially aligned with the main direction of the forearm.

The following can also be provided a sixth movable body 126 with respect to the fifth movable body 125 about a sixth axis 106 that passes substantially through the articulation of the wrist and is substantially orthogonal to the axis 105.

Moreover, a seventh movable body 127 can also be provided that can move with respect to sixth movable body 126 about a seventh axis 107 that passes substantially through the centre of the articulation of the wrist and is substantially orthogonal to axis 106.

As shown in Fig. 3, according to the present invention, the rotation about axis 102 is possible by means of a S 130, as described hereinafter in a possible exemplary embodiment thereof.

More in detail, as shown in Figs. 4 and 5, mechanism 130 comprises two four-bar linkages whose sides are two-by-two adjacent and are connected to each other, in particular four elongated bodies 131,132,133,134 are provided that are articulated to one another and in which first movable body 121 and second movable body 122 are articulated by means of a plurality of hinges 141,142,143,144,145,146,147, which are shown more in detail in Fig. 6.

Each hinge 141-147 comprises a respective rotation axis parallel to second axis 102 of second movable body 122 with respect to first movable body 121.

More in detail, in a possible embodiment, first elongated body 131 of four elongated bodies 131,132,133,134 can rotate with respect to first movable body 121 by means of a first hinge 141.

A second elongated body 132 can rotate with respect to first elongated body 131 by means of a second hinge 142, and can rotate with respect to third movable body 122 by means of a third hinge 143.

A third elongated body 133 can rotate with respect to third movable body 122 by a fourth hinge 144 and can rotate with respect to first elongated body 131 by a fifth hinge 145.

A fourth elongated body 134 can rotate with respect to first movable body 121 by a sixth hinge 146 and can rotate with respect to second elongated body 132 by a seventh hinge 147.

Preferably, the distance between first hinge 141 and second hinge 142 is the same as the distance between third hinge 143 and axis 102. Furthermore, the distance between sixth hinge 146 and seventh hinge 147 is the same as the distance between third hinge 143 and axis 102. Further, the distance between second hinge 142 and third hinge 143 is the same as the distance between first hinge 141 and axis 102. Finally, the distance between fifth hinge 145 and fourth hinge 144 is the same as the distance between first hinge 141 and axis 102.

As shown in Figs. 9 and 10, by the above described double four-bar linkage movable body 122 can rotate about the intersection point of axes 101,102 and 103, which coincide with centre 72 of the shoulder joint or of the hip joint (not shown, but easily implemented by a skilled person), in order to achieve two extreme positions that allows a wide shoulder joint workspace to the exoskeleton, which is somewhat the same as in a healthy user.

Forces can be exerted on end effector 110 by passive or active torque generators of unit 120 (Fig. 3) or in different equivalent units through cables or tendons 25, only a few of which are shown in Figs. 4 and 5, and driven pulleys 151-162.

A similar exoskeleton device can be made for the lower limb (not shown). In this case, the intersection point of three axes 101,102 and 103 will pass through the hip joint.

The foregoing description of specific exemplary embodiments will so fully reveal the invention according to the conceptual point of view, so that others, by applying current knowledge, will be able to modify and/or adapt in various applications the specific exemplary embodiments without further research and without parting from the invention, and, accordingly, it is meant that such adaptations and modifications will have to be considered as equivalent to the specific embodiments. The means and the materials to carry out the different functions described herein could have a different nature without, for this reason, departing from the field of the invention. It is to be understood that the phraseology or terminology that is employed herein is for the purpose of description and not of limitation.

## Claims

1. An exoskeleton robotic device, to be worn on a user's upper or lower limb, said device comprising a shoulder or hip exoskeleton joint comprising:
- a base body (120), configured to be fastened substantially integral to a user (10);
- a first movable body (121), connected to said base body (120) by a first rotational joint (101) that has a first rotation axis (101) substantially orthogonal to the front plane of the user's upper body (15) and passing substantially through the centre (72) of said user's shoulder or hip joint;
- a second movable body (122), connected to said first movable body (121) by a second rotational joint (102) that has a second rotation axis (102) substantially orthogonal to said first rotation axis (101) and configured to be incident with said first rotation axis (101) at an intersection point substantially coincident with the centre (72) of the user's shoulder or hip joint;
- a third movable body (123), substantially integral to the user's (10) arm or leg and connected to said second movable body (122) by a third rotational joint (103) that has a third rotation axis configured to be substantially parallel to the flexion-extension axis of the user's (10) elbow or knee, substantially orthogonal to said second axis (102) and incident with the second axis (102) at said intersection point substantially coincident with the centre (72) of the user's shoulder or hip joint,
**characterized in that**
- said second rotational joint (102) is implemented in said second movable body (122) by a remote centre of rotation mechanism which has its own centre at said intersection point (72), and **in that**
- said remote centre of rotation mechanism comprises a four-bar linkage mechanism.

2. The exoskeleton robotic device according to claim 1, wherein said four-bar linkage mechanism comprises two parallelograms (131,132,133,134) that have sides which are two-by-two adjacent and pivotally linked to each other, and which are articulated to said first and second movable bodies (121,122) by respective hinges (141,142,143,144,145,146,147).

3. The exoskeleton robotic device according to claim 1, comprising joints downstream of said second rotational joint (102) that are provided by three main idle pulleys and that are arranged to receive cables or tendons for transmitting the movement from said active or passive actuation mechanism, said main pulleys having axes aligned with suitable axes of the hinges of the two parallelograms, which form said remote centre of rotation mechanism.

4. The exoskeleton robotic device according to claim 3, wherein secondary idle pulleys are provided that have axes integral to said movable parts of the mechanism, and that are configured to ensure that a cable or tendon remains wound about the main idle pulleys in all the positions achieved by said mechanism.

5. The exoskeleton robotic device according to claim 3, wherein a fourth movable body is provided that is configured to be maintained substantially integral to the user's forearm (10) and to be connected to said third movable body (123) by a fourth rotational joint (148) an axis (104) of said fourth rotational joint substantially parallel to the axis of said third rotational joint (103) and substantially incident with the elbow joint.

6. The exoskeleton robotic device according to claim 2, comprising, in each of said four-bar linkages, a first, a second, a third and a fourth elongated bodies (131,132,133,134) that are pivotally connected to one another and that are articulated with said first and third movable bodies (123) by said hinges (141,142,143,144,145,146,147), each hinge having a respective rotation axis parallel to said second axis (102) of the second movable body (122).

7. The exoskeleton robotic device according to claim 6, wherein said first, second, third and fourth elongated bodies (131,132,133,134) are pivotally connected to each other in such a way that:
- said first elongated body (131) rotates with respect to the first movable body (121) by means of a first hinge (141);
- said second elongated body (132) can rotate with respect to the first elongated body (131) by means of a second hinge (142), and can rotate with respect to the third movable body (122) by means of a third hinge (143);
- said third elongated body (133) rotates with respect to the third movable body (122) by means of a fourth hinge (144) and can rotate with respect to the first elongated body (131) by means of a fifth hinge (145);
- said fourth elongated body (134) can rotate with respect to the first movable body (121) by means of a sixth hinge (146) and can rotate with respect to the second elongated body (132) by means of a seventh hinge (147).

8. The exoskeleton robotic device according to claim 6, wherein
- the distance between the first hinge (141) and the second hinge (142) is the same as the distance between the third hinge (143) and the axis (102);
- the distance between the sixth hinge (146) and the seventh hinge (147) is the same as the distance between the third hinge (143) and the axis (102);
- the distance between the second hinge (142) and the third hinge (143) is the same as the distance between the first hinge (141) and the axis (102);
- the distance between the fifth hinge (145) the fourth hinge (144) is the same as the distance between the first hinge (141) and the axis (102).

## Patentansprüche

1. Eine Exoskelett-Robotervorrichtung, die an bzw. auf einer oberen oder unteren Extremität bzw. Gliedmaße eines Anwenders zu tragen ist, wobei die Vorrichtung ein Schulter- oder Hüft-Exoskelettgelenk aufweist, das umfasst:
- einen Basiskörper (120), der ausgestaltet ist, im Wesentlichen integral an einem Anwender (10) befestigt zu werden,
- einen ersten beweglichen Körper (121), der mit dem Basiskörper (120) durch ein erstes Drehgelenk (101) verbunden ist, das eine erste Rotationsachse (101) besitzt, die im Wesentlichen orthogonal zu der Frontebene des Oberkörpers (15) des Anwenders ist und die im Wesentlichen durch das Zentrum (72) des Schulter- oder Hüftgelenks des Anwenders verläuft,
- einen zweiten beweglichen Körper (122), der mit dem ersten beweglichen Körper (121) durch ein zweites Drehgelenk (102) verbunden ist, das eine zweite Rotationsachse (102) besitzt, die im Wesentlichen orthogonal zu der ersten Rotationsachse (101) ist und die ausgestaltet ist, um auf die erste Rotationsachse (101) an einem Schnittpunkt im Wesentlichen koinzident mit dem Zentrum (72) des Schulter- oder Hüftgelenks des Anwenders zu treffen,
- einen dritten beweglichen Körper (123), der im wesentlichen Integral mit dem Arm oder Bein des Anwenders (10) ist und der mit dem zweiten beweglichen Körper (122) durch ein drittes Drehgelenk (103) verbunden ist, das eine dritte Rotationsachse besitzt, die ausgestaltet ist, um im Wesentlichen parallel zu der Flexions-Extensions-Achse des Ellbogens oder Knies des Anwenders (10) zu sein, im Wesentlichen orthogonal zu der zweiten Achse (102) und auftreffend auf die zweite Achse (102) an dem Schnittpunkt im Wesentlichen koinzident mit dem Zentrum (72) des Schulter- oder Hüftgelenks des Anwenders,
**dadurch gekennzeichnet, dass**
- das zweite Drehgelenk (102) in dem zweiten beweglichen Körper (122) durch einen Mechanismus mit entferntem Rotationszentrum implementiert ist, der sein eigenes Zentrum an dem Schnittpunkt (72) hat, und dadurch, dass der Mechanismus mit entferntem Rotationszentrum einen Vierstab-Verbindungsgliedmechanismus aufweist.

2. Die Exoskelett-Robotervorrichtung gemäß Anspruch 1, wobei der Vierstab-Verbindungsgliedmechanismus zwei Parallelogramme (131,132,133,134) aufweist, die Seiten haben, die zu zweien benachbart und schwenkbar miteinander verbunden sind und die mit den ersten und zweiten beweglichen Körpern (122,122) durch jeweilige Scharniere (141,142,143,144,145,146,147) gelenkig verbunden sind.

3. Die Exoskelett-Robotervorrichtung gemäß Anspruch 1, mit Gelenken stromab von dem zweiten Drehgelenk (102), die durch drei Haupt-Laufrollen vorgesehen sind und die angeordnet sind, um Kabel oder Spannglieder zum Übertragen der Bewegung von dem aktiven oder passiven Betätigungsmechanismus aufzunehmen, wobei die Haupt-Rollen Achsen besitzen, die mit geeigneten Achsen der Scharniere der zwei Parallelogramme ausgerichtet sind, welche den Mechanismus mit entferntem Rotationszentrum bilden.

4. Die Exoskelett-Robotervorrichtung gemäß Anspruch 3, wobei sekundäre Laufrollen vorgesehen sind, die Achsen integral mit den beweglichen Teilen des Mechanismus haben, und die ausgestaltet sind, um sicherzustellen, dass ein Kabel oder ein Spannelement um die Haupt-Laufrollen in allen durch den Mechanismus einnehmbaren Positionen gewunden bleibt.

5. Die Exoskelett-Robotervorrichtung gemäß Anspruch 3, wobei ein vierter beweglicher Körper vorgesehen ist, der ausgestaltet ist, um im Wesentlichen integral mit dem Vorderarm des Anwenders (10) gehalten zu werden und um mit dem dritten beweglichen Körper (123) durch ein viertes Drehgelenk (148) verbunden zu werden bzw. zu sein, wobei eine Achse (104) des vierten Drehgelenks im Wesentlichen parallel zu der Achse des dritten Drehgelenks (103) ist und im Wesentlichen auf das Ellbogengelenk trifft.

6. Die Exoskelett-Robotervorrichtung gemäß Anspruch 2, mit, in jedem der Vierstab-Verbindungsglieder, einem ersten, einem zweiten, einem dritten und einem vierten länglichen Körper (131,132,133,134), die schwenkbar miteinander verbunden sind und die mit den ersten und dritten beweglichen Körpern (123) durch die Scharniere (141,142,143,144,145,146,147) gelenkig verbunden sind, wobei jedes Scharnier eine jeweilige Rotationsachse parallel zu der zweiten Achse (102) des zweiten beweglichen Körpers (122) hat.

7. Die Exoskelett-Robotervorrichtung gemäß Anspruch 6, wobei die ersten, zweiten, dritten und vierten länglichen Körper (131,132,133,134) schwenkbar miteinander in einer solchen Weise verbunden sind, dass:
- der erste längliche Körper (131) bezüglich dem ersten beweglichen Körper (121) mittels eines ersten Scharniers (141) rotiert,
- der zweite längliche Körper (132) bezüglich dem ersten länglichen Körper (131) mittels eines zweiten Scharniers (142) rotieren kann, und bezüglich dem dritten beweglichen Körper (122) mittels eines dritten Scharniers (143) rotieren kann,
- der dritte längliche Körper (133) bezüglich dem dritten beweglichen Körper (122) mittels eines vierten Scharniers (144) rotiert und bezüglich dem ersten länglichen Körper (131) mittels eines fünften Scharniers (145) rotieren kann,
- der vierte längliche Körper (134) bezüglich dem ersten beweglichen Körper (121) mittels eines sechsten Scharniers (146) rotieren kann und bezüglich dem zweiten länglichen Körper (132) mittels eines siebten Scharniers (147) rotieren kann.

8. Die Exoskelett-Robotervorrichtung gemäß Anspruch 6, wobei
- die Distanz zwischen dem ersten Scharnier (141) und dem zweiten Scharnier (142) dieselbe ist wie die Distanz zwischen dem dritten Scharnier (143) und der Achse (102),
- die Distanz zwischen dem sechsten Scharnier (146) und dem siebten Scharnier (147) dieselbe ist wie die Distanz zwischen dem dritten Scharnier (143) und der Achse (102),
- die Distanz zwischen dem zweiten Scharnier (142) und dem dritten Scharnier (143) dieselbe ist wie die Distanz zwischen dem ersten Scharnier (141) und der Achse (102),
- die Distanz zwischen dem fünften Scharnier (145) dem vierten Scharnier (144) dieselbe ist wie die Distanz zwischen dem ersten Scharnier (141) und der Achse (102).

## Revendications

1. Dispositif robotique à exosquelette porté sur un membre supérieur ou inférieur de l'utilisateur, ledit dispositif comprenant une articulation à exosquelette de l'épaule ou de la hanche, comprenant :
- un corps de base (120) configuré pour être fixé globalement d'un seul tenant à l'utilisateur (10) ;
- un premier corps mobile (121) relié audit corps de base (120) par une première articulation rotative (101) présentant un premier axe de rotation (101) substantiellement perpendiculaire au premier plan du corps supérieur de l'utilisateur (15) et passant substantiellement par le centre (72) de l'articulation de l'épaule ou de la hanche de l'utilisateur ;
- un deuxième corps mobile (122) relié audit premier corps mobile (121) par une deuxième articulation rotative (102) substantiellement perpendiculaire audit premier axe de rotation (101), et configuré pour être incident avec ledit premier axe de rotation (101) en un point d'intersection substantiellement coïncident avec le centre (72) de articulation de l'épaule ou de la hanche de l'utilisateur ;
- un troisième corps mobile (123) substantiellement d'un seul tenant avec le bras ou la jambe de l'utilisateur (10), et relié audit deuxième corps mobile (122) par une troisième articulation rotative (103) présentant un troisième axe de rotation configuré pour être substantiellement parallèle à l'axe de flexion/ extension du coude ou du genou de l'utilisateur (10), substantiellement perpendiculaire audit deuxième axe (102) et incident avec le deuxième axe (102) audit point d'intersection substantiellement coïncident avec le centre (72) de l'articulation de l'épaule ou de la hanche de l'utilisateur,
**caractérisé en ce que**
- ladite deuxième articulation rotative (102) est réalisée dans ledit deuxième corps mobile (122) par un mécanisme de centre de rotation éloigné possédant son propre centre audit point d'intersection (72), et **en ce que**
- ledit mécanisme de centre de rotation éloigné comprend un mécanisme d'articulation à quatre barres.

2. Dispositif robotique à exosquelette selon la revendication 1, ledit mécanisme d'articulation à quatre barres comprenant deux parallélogrammes (131,132,133,134) possédant des côtés adjacents deux par deux et reliés de façon pivotante entre eux, et s'articulant avec lesdits premier et deuxième corps mobiles (121, 122) par des charnières correspondantes (141,142,143,144,145,146,147).

3. Dispositif robotique à exosquelette selon la revendication 1, comprenant des articulations en aval de la deuxième articulation rotative (102), assurées par trois poulies libres principales, et agencées pour recevoir des câbles ou tendons pour la transmission du mouvement depuis ledit mécanisme d'actionnement actif ou passif, lesdites poulies principales présentant des axes alignés avec des axes appropriés des charnières des deux parallélogrammes, formant ledit mécanisme de centre de rotation éloigné.

4. Dispositif robotique à exosquelette selon la revendication 3, comprenant des poulies libres secondaires présentant des axes d'un seul tenant avec lesdites parties mobiles du mécanisme, et configurées de façon à assurer qu'un câble ou un tendon reste enroulé autour des poulies libres principales dans toutes les positions réalisées par ledit mécanisme.

5. Dispositif robotique à exosquelette selon la revendication 3, comprenant un quatrième corps mobile configuré pour être maintenu substantiellement d'un seul tenant avec l'avant-bras de l'utilisateur (10), et être relié audit troisième corps mobile (123) par une quatrième articulation rotative (148), un axe (104) de ladite quatrième articulation rotative substantiellement parallèle à l'axe de ladite troisième articulation rotative (103), et substantiellement incidente avec l'articulation du coude.

6. Dispositif robotique à exosquelette selon la revendication 2, comprenant, dans chacune desdites articulations à quatre barres, un premier, un deuxième, un troisième et un quatrième corps allongés (131,132,133,134) reliés de façon pivotante entre eux, et s'articulant avec lesdits premier et troisième corps mobiles (123) par desdites charnières (141,142,143,144,145,146,147), chaque charnière possédant un axe de rotation respectif parallèle audit deuxième axe (102) du deuxième corps mobile (122).

7. Dispositif robotique à exosquelette selon la revendication 6, lesdits premier, deuxième, troisième et quatrième corps allongés (131,132,133,134) étant reliés de façon pivotante entre eux de sorte que :
- ledit premier corps allongé (131) tourne relativement au premier corps mobile (121) par le biais d'une première charnière (141) ;
- ledit deuxième corps allongé (132) peut tourner relativement au premier corps allongé (131) par le biais d'une deuxième charnière (142), et peut tourner relativement au troisième corps mobile (122) par le biais d'une troisième charnière (143) ;
- ledit troisième corps allongé (133) tourne relativement au troisième corps mobile (122) par le biais d'une quatrième charnière (144) et peut tourner relativement au premier corps allongé (131) par le biais d'une cinquième charnière (145) ;
- ledit quatrième corps allongé (134) peut tourner relativement au premier corps mobile (121) par le biais d'une sixième charnière (146), et peut tourner relativement au deuxième corps allongé (132) par le biais d'une septième charnière (147).

8. Dispositif robotique à exosquelette selon la revendication 6, dans lequel
- la distance entre la première charnière (141) et la deuxième charnière (142) est égale à la distance entre la troisième charnière (143) et l'axe (102) ;
- la distance entre la sixième charnière (146) et la septième charnière (147) est égale à la distance entre la troisième charnière (143) et l'axe (102) ;
- la distance entre la deuxième charnière (142) et la troisième charnière (143) est égale à la distance entre la première charnière (141) et l'axe (102) ;
- la distance entre la cinquième charnière (145) et la quatrième charnière (144) est égale à la distance entre la première charnière (141) et l'axe (102).
